# EUROPEAN PATENT SPECIFICATION

(11) **EP 2 935 420 B1**
(45) Date of publication and mention of the grant of the patent: **16.05.2018**
(21) Application number: 13818727.3
(22) Date of filing: 18.12.2013
(51) Int. Cl.: C08J 5/22, C08L 81/06, B01D 67/00, B01D 71/68, B01D 69/04, B01D 69/06

(54) **METHOD FOR MANUFACTURING SULFONE POLYMER MEMBRANE**
VERFAHREN ZUR HERSTELLUNG VON SULFONPOLYMERMEMBRANEN
PROCÉDÉ DE FABRICATION DE MEMBRANES À BASE DE POLYMÈRE DE SULFONE.

(30) Priority: 19.12.2012 EP 12306621
(43) Date of publication of application: 28.10.2015
(73) Proprietor: Solvay SA, 1120 Bruxelles (BE)
(72) Inventor: MOORE, Theodore, Cumming, GA 30041 (US); CHEN, Hong, Alpharetta, GA 30005 (US); BOURDETTE, Arnaud, F-77500 Chelles (FR)
(74) Representative: Benvenuti, Federica
(86) International application number: PCT/EP2013/077194
(87) International publication number: WO 2014/096071

(56) References cited:
- WO-A1-2012/079231
- WO-A2-2005/082500
- DE-A1- 10 034 098
- US-A- 4 038 351
- US-A- 4 208 508
- US-A- 5 869 174
- US-A- 6 056 903
- US-A1- 2005 242 021
- US-B1- 6 218 441
- US-B1- 6 277 281
- US-B1- 6 495 043
- US-B1- 6 632 359
- "Use of blends of the new diester Rhodiasolv IRIS and dimethyl sulphoxide(DMSO) in order to replace solvents with bad HSE profiles such as N-methylpyrrolidone (NMP), dimethyl formamide (DMF), dimethyl acetamide (DMAC) invarious applications", INTERNET CITATION, 7 January 2011 (2011-01-07), pages 1-6, XP002683025, Retrieved from the Internet: URL:http://ip.com/IPCOM/000202891 [retrieved on 2012-09-07]

## Description

### Technical Field

The present invention relates to a method for the manufacture of sulfone polymer membranes. In particular the invention relates to a method comprising using certain sulfone polymer solutions.

### Background Art

Aromatic polysulfones having para-linked diphenylenesulfone group as part of their backbone repeat units are a class of thermoplastic polymers characterized by high glass-transition temperatures, good mechanical strength and stiffness, and outstanding thermal and oxidative resistance. By virtue of their mechanical, thermal, and other desirable characteristics, these polymers enjoy an increasingly wide and diversified range of commercial applications, including notably coatings and membranes for wide field of use.

Manufacturing techniques for industrial production of membranes generally include the preparation of solutions of sulfone polymers in suitable solvents. According to these techniques, a clear polymer solution is precipitated into two phases: a solid, polymer-rich phase that forms the matrix of the membrane, and a liquid, polymer-poor phase that forms the membrane pores. Polymer precipitation from a solution can be achieved in several ways, such as cooling, solvent evaporation, precipitation by immersion in water, or imbibition of water from the vapor phase. If precipitation is rapid, the pore-forming liquid droplets tend to be small and the membranes formed are markedly asymmetric. If precipitation is slow, the pore-forming liquid droplets tend to agglomerate while the casting solution is still fluid, so that the final pores are relatively large and the membrane structure is more symmetrical.

In these techniques, it remains nevertheless key to provide for stable and homogeneous solutions of polymer, as starting material.

The vast majority of aromatic sulfone-based polymers can be readily dissolved in certain highly polar solvents and certain chlorinated solvents to form stable solutions. These powerful solvents include N-methylpyrrolidone (NMP), N, N-dimethylacetamide (DMAc), pyridine, and aniline, 1,1,2-trichloroethane and 1,1,2,2-tetrachloroethane.

Pyridine, aniline and chlorinated solvents are less desirable because of their potentially harmful health effects.

With regards to NMP and DMAc, which have been since years the solvents of choice in the industry for solution-based hollow-fiber spinning processes in the manufacture of polysulfone asymmetric membranes, these solvents are now focusing environmental and safety concerns, having regards to the safety risks associated to their handling and to possible leakage/emissions in the environment, so questing for substitution.

For instance, NMP has been notably classified according to the European regulation (EC) No1272/2008 in the hazard class Repr.1B code H360D (may damage the unborn child), Eye Irrit.2 code H319, STOT SE 3 code H335, Skin Irrit.2 H315 and according to the European directive 67/548/EEC it is classified as Reprotoxic Cat2 code R61, Xi codes R36/37/38. Further more it is submitted to the Toxic Release Inventory (SARA Title III Section 313).

Similarly, DMAc N,N-Dimethylacetamide is covered by index number 616-011-00-4 of Regulation (EC) No 1272/2008 in Annex VI, part 3, Table 3.1 (the list of harmonised classification and labelling of hazardous substances) as toxic for reproduction category 1B (H360D: "May damage the unborn child"). The corresponding classification in Annex VI, part 3, Table 3.2 (the list of harmonised and classification and labelling of hazardous substances from Annex I to Directive 67/548/EEC) of Regulation (EC) No 1272/2008 is toxic for reproduction category 2 (R61:"May cause harm to the unborn child").

The present invention thus provides a solution for obviating to environmental and safety concerns which arise in using NMP, DMAc or other similar solvents and provides an alternative method for manufacturing membranes.

US6218441 discloses a melt spinning process for making a polysulfone semipermeable membrane, the process comprising the steps of:
(a) forming a composition including a polysulfone compound, a solvent, and a non-solvent;
(b) heating the composition to a temperature at which the composition is a homogeneous liquid;
(c) extruding the homogeneous liquid to form an extrudate; and
(d) thermal quenching the extrudate to cause a phase separation and thereby form a semipermeable membrane. The solvent is selected from the group consisting of tetramethylene sulfone, 3-methyl sulfolane, benzophenone, n,n-dimethylacetamide, 2-pyrrolidone, 3-methylsulfolene, pyridine, thiophene, o-dichlorobenzene, 1-chloronaphthalene, methyl salicylate, anisole, o-nitroanisole, diphenyl ether, diphenoxy methane, acetophenone, p-methoxyphenyl-2-ethanol, 2-piperidine, antipyrine, delta - valerolactam, diethyl phthalate, diphenyl sulfone, diphenyl sulfoxide, phthalic acid, dioctyl ester, phthalic acid, dimethyl ester, phthalic acid, diethyl ester, phthalic acid, dibutyl ester, phthalic acid, bis(2-ethylhexyl) ester, phthalic acid, benzyl butyl ester, phenyl sulfide, and mixtures thereof.

### Brief description of drawings

Figure 1 is a magnified picture of a cut-off in the thickness direction of a PES membrane from solvent EA
Figure 2 is a magnified picture of a cut-off in the thickness direction of a PES membrane from solvent DE + DMSO

### Summary of invention

The invention thus pertains to a method for manufacturing a sulfone polymer membrane comprising the steps of:
(i) preparing a sulfone polymer solution [solution (SP)] comprising:
   - at least one sulfone polymer [polymer (P)];
   - a solvent mixture [mixture (M)] comprising:
      at least one solvent selected from the group consisting of diesters of formula (I_{de}) and ester-amide of formula (Iₑₐ), and optionally comprising at least one diamide of formula (I_{da}), as defined in claim 1, and optionally dimethylsulfoxide (DMSO);
(ii) processing said solution (SP) into a film;
(iii) immersing said film in a non-solvent bath.

The Applicant has found that said at least one diester (I_{de}) and ester-amide (Iₑₐ) as above detailed, possibly in combination with diamide (I_{da}) and/or DMSO can provide a solvent mixture which, in addition of possessing a totally positive environmental profile, with no environmental nor toxicological concerns, is effective in providing sulfone polymer solutions suitable for the manufacture of membranes.

This and other objects, advantages, and features of the invention will be more readily understood and appreciated by reference to the detailed description of the invention.

The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane).

Porous membranes are generally characterized by the average pore diameter and the porosity, i.e. the fraction of the total membrane that is porous.

Membranes having a uniform structure throughout their thickness are generally known as symmetrical membranes, which can be either dense or porous; membranes having pores which are not homogeneously distributed throughout their thickness are generally known as asymmetric membranes. Asymmetric membranes are characterized by a thin selective layer (0.1-1 µm thick) and a highly porous thick layer (100-200 µm thick) which acts as a support and has little effect on the separation characteristics of the membrane.

Membranes can be in the form of a flat sheet or in the form of tubes. Tubular membranes are classified based on their dimensions in tubular membranes having a diameter greater than 3 mm; capillary membranes, having a diameter comprised between 0.5 mm and 3 mm; and hollow fibers having a diameter of less than 0.5 mm. Oftentimes capillary membranes are also referred to as hollow fibres.

Flat sheet membranes are generally preferred when high fluxes are required whereas hollow fibres are particularly advantageous in applications where compact modules with high surface areas are required.

Depending on their applications membranes may also be supported to improve their mechanical resistance. The support material is selected to have a minimal influence on the selectivity of the membrane.

The solution (SP) comprises polymer (P) and a mixture of solvents [mixture (M)].

The term "solvent" is used herein in its usual meaning, that is it indicates a substance capable of dissolving another substance (solute) to form an uniformly dispersed mixture at the molecular level. In the case of a polymeric solute it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

The mixture (M) can comprise, possibly in addition to DMSO and/or diamide (I_{da}), a mixture of more than one diester of formula (I_{de}), a mixture of more than one esteramide of formula (Iₑₐ), or can comprise a mixture of one or more than one diester (I_{de}) and one or more than one esteramide (Iₑₐ). The Applicant thinks, without being bound by this theory, that the use of mixtures of one ore more diesters (I_{de}) and/or one of more esteramides (Iₑₐ) can provide improved drying properties for the composition.

In embodiments wherein the mixture (M) comprises one or more than one esteramide (Iₑₐ), it is understood that the esteramide (Iₑₐ) is generally present in the mixture (M) combination with diamide (I_{da}), as above detailed.

With regards to the expression "C₁₋C₂₀ alkyl" is used according to its usual meaning and it encompasses notably linear, cyclic, branched saturated hydrocarbon chain having from 1 to 20 carbon atoms and preferably from 1 or 2 to 10 carbon atoms.

Similarly, the expression "C₁₋C₂₀ aryl" is used according to its usual meaning and it encompasses notably aromatic mono- or poly-cyclic groups, preferably mono- or bi-cyclic groups, comprising from 6 to 12 carbon atoms, preferably phenyl or naphthyl.

Still, the expression "C₁₋C₂₀ arylalkyl" is used according to its usual meaning and it encompasses linear, branched or cyclic saturated hydrocarbon groups comprising, as substituent, one or more than one aromatic mono- or poly-cyclic group, such as, notably benzyl group.

Finally, the expression "C₁₋C₂₀ alkylaryl" is used according to its usual meaning and it encompasses aromatic mono- or poly-cyclic groups comprising as substituent, one or more than one alkyl group, e.g. one or more than one linear, cyclic, branched saturated hydrocarbon chain having from 1 to 14 carbon atoms and preferably from 1 or 2 to 10 carbon atoms.

The mixture (M) comprises, possibly in addition to DMSO:
(i) at least one of the diester (I'_{de}) and at least one diester (I"_{de}), possibly in combination with at least one diester of formula (II_{de}); or
(ii) at least one of the esteramide (I'ₑₐ) and at least one esteramide (I"ₑₐ), possibly in combination with at least one esteramide of formula (IIₑₐ);
(iii) at least one of the esteramide (I'ₑₐ), at least one diamide (I'_{da}), at least one esteramide (I"ₑₐ) and at least one diamide (I"_{da}), possibly in combination with at least one esteramide of formula (IIₑₐ) and/or at least one diamide of formula (II_{da}); or
(iv) combinations of (i) with (ii) and/or (iii),
wherein:
- (I'_{de}) is R¹-OOC-A_{MG}-COO-R²
- (I'ₑₐ) is R¹-OOC-A_{MG}-CO-NR³R⁴
- (I'_{da}) is R⁵R⁶N-OC-A_{MG}-CO-NR⁵R⁶
- (I"_{de}) is R¹⁻OOC-A_{ES}-COO-R²
- (I"ₑₐ) is R⁵R⁶N-OC-A_{ES}-CO-NR⁵R⁶; and
- (II_{de}) is R¹-OOC-(CH₂)₄-COO-R²,
- (IIₑₐ) is R¹OOC-(CH₂)₄-CO-NR³R⁴,
- (II_{da}) is R⁵R⁶N-OC-(CH₂)₄-CO-NR⁵R⁶,
wherein:
- A_{MG} is of formula MGₐ -CH(CH₃)-CH₂-CH₂- or MG_{b} -CH₂-CH₂-CH(CH₃)-, )-,
- A_{ES} is of formula ESₐ -CH(C₂H₅)-CH₂-, or ES_{b} -CH₂-CH(C₂H₅)-; and wherein R¹ and R², equal to or different from each other, are independently selected from the group consisting of C₁-C₂₀ alkyl, C₁-C₂₀ aryl, C₁-C₂₀ alkyaryl, C₁-C₂₀ arylalkyl groups;
- R³, R⁴, R⁵ and R⁶, equal to or different from each other and at each occurrence, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both (1) R³ and R⁴ or R⁵ and R⁶ and (2) the nitrogen atom to which they are bound, said cyclic moieties possibly comprising one or more than one heteroatom, e.g. an oxygen atom or an additional nitrogen atom.

In above mentioned formulae (I'_{de}), (I"_{de}), and (II_{de}), (I'ₑₐ), (I"ₑₐ) and (IIₑₐ), (I'_{da}), (I"_{da}) and (II_{da}), R¹ and R² are preferably methyl groups, while R³, R ⁴, R⁵ and R⁶ equal to or different from each other and at each occurrence, are preferably selected from the group consisting of methyl, ethyl, hydroxyethyl.

In this preferred variant of this embodiment, the mixture (M) preferably consists essentially of any of (i), (ii), (iii) or (iv) mixtures, possibly in combination with DMSO. Other minor components might be present, preferably in an amount not exceeding 1 % wt over the entire weight of the mixture (M), provided they do not substantially modify the properties of mixture (M).

According to this variant, mixture (M) can comprise (or consist essentially of), possibly in addition to DMSO:
(j) a diester mixture consisting essentially of:
   - from 70 to 95 % by weight of diester of formula (I'_{de});
   - from 5 to 30 % by weight of diester of formula (I"_{de}), and
   - from 0 to 10 % by weight of diester of formula (II_{de}), as above detailed; or
(jj) an esteramide mixture consisting essentially of:
   - from 70 to 95 % by weight of esteramide of formula (I'ₑₐ);
   - from 5 to 30 % by weight of esteramide of formula (I"ₑₐ), and
   - from 0 to 10 % by weight of any of esteramide of formula (IIₑₐ), as above detailed; or
(jjj) an esteramide/diamide mixture consisting essentially of
   - from 70 to 95 % by weight of esteramide of formula (I'ₑₐ) and diamide of formula (I'_{da}), with (I'_{da}) representing from 0.01 to 10 % by weight of cumulative weigh of (I'ₑₐ) and (I'_{da});
   - from 5 to 30 % by weight of esteramide of formula (I"ₑₐ) and diamide of formula (I"_{da}), with (I"_{da}) representing from 0.01 to 10 % by weight of cumulative weigh of (I"ₑₐ) and (I"_{da}) and
   - from 0 to 10 % by weight of any of esteramide of formule (IIₑₐ) and diamide (II_{da}), as above detailed; or
      mixtures of (j) with (jj) and/or (jjj) as above detailed.

An example of the useful diester-based mixture wherein A is branched is RHODIASOLV® IRIS solvent, commercialized by Solvay.

RHODIASOLV® IRIS solvent is a mixture of diesters comprising essentially (more than 80 wt %) of dimethyl ethylsuccinate and dimethyl 2-methylglutarate.

In one other embodiment, A in formulae (I_{de}), (Iₑₐ) and (I_{da}) is a linear divalent alkylene group of formula (CH₂)ᵣ, wherein r is an integer of from 2 to 4.

In a variant of this embodiment, the mixture (M) comprises, possibly in addition to DMSO:
(k) at least one of the diester of formula (III⁴_{de}), the diester of formula (III³ _{de}), and the diester of formula (III²_{de}); or
(kk) at least one of the esteramide (III⁴ₑₐ), the esteramide (III³ₑₐ), and the esteramide of formula (III²ₑₐ); or
(kkk) at least one of the esteramide of formula (III⁴ₑₐ), the esteramide of formula (III³ₑₐ), and the esteramide of formula (III²ₑₐ), and at least one of the diamide of formula (III⁴_{da}), the diamide of formula (III³_{da}), and the diamide of formula (III²_{da}); or
(kv) combinations of (k) with (kk) and/or (kkk),
wherein:
- (III⁴_{de}) is R¹-OOC-(CH₂)₄-COO-R²
- (III³_{de}) is R¹-OOC-(CH₂)₃-COO-R²
- (III²_{de}) is R¹-OOC-(CH₂)₂-COO-R²
- (III⁴ₑₐ) is R¹-OOC-(CH₂)₄-CO-NR³R⁴
- (III³ₑₐ) is R¹-OOC-(CH₂)₃-CO-NR³R⁴
- (III²ₑₐ) is R¹-OOC-(CH₂)₂-CO-NR³R⁴
- (III⁴_{da}) is R⁵R⁶N-OC-(CH₂)₄-CO-NR⁵R⁶
- (III³_{da}) is R⁵R⁶N-OC-(CH₂)₃-CO-NR⁵R⁶
- (III²_{da}) is R⁵R⁶N-OC-(CH₂)₂-CO-NR⁵R⁶
wherein R¹ and R², equal to or different from each other, are independently C₁-C₂₀ alkyl, C₁-C₂₀ aryl, C₁-C₂₀ alkyaryl, C₁-C₂₀ arylalkyl groups;
- R³, R⁴, R⁵ and R⁶, equal to or different from each other and at each occurrence, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both (1) R³ and R⁴ or R⁵ and R⁶ and (2) the nitrogen atom to which they are bound, said cyclic moieties possibly comprising one or more than one heteroatom, e.g. an oxygen atom or an additional nitrogen atom.

In above mentioned formulae (III⁴_{de}), (III³_{de}), (III²_{de}), (III⁴ₑₐ), (III³ₑₐ), and (III²ₑₐ), (III⁴_{da}), (III³_{da}), and (III²_{da}), R¹ and R² are preferably methyl groups, while R³, R⁴, R⁵ and R⁶, equal to or different from each other, are preferably selected from the group consisting of methyl, ethyl, hydroxyethyl.

According to certain preferred variant of this embodiment, mixture (M) can comprise, possibly in addition to DMSO:
(I) a diester mixture consisting essentially of dimethyladipate (r = 4), dimethylglutarate (r = 3) and dimethylsuccinate (r = 2); or
(II) an esteramide mixture consisting essentially of H₃COOC-(CH₂)₄ -CO-N(CH₃)₂, H₃COOC-(CH₂)₃-CO-N(CH₃)₂, and H₃COOC-(CH₂)₂ -CO-N(CH₃)₂; or
(III) a diester mixture of diethyladipate (r = 4), diethylglutarate (r = 3) and diethylsuccinate (r = 2); or
(Iv) an esteramide mixture consisting essentially of H₅C₂OOC-(CH₂)₄ -CO-N(CH₃)₂, H₅C₂OOC-(CH₂)₃-CO-N(CH₃)₂, and H₅C₂OOC-(CH₂)₂ -CO-N(CH₃)₂; or
(v) a mixture of diisobutyladipate (r = 4), diisobutylglutarate (r = 3) and diisobutylsuccinate (r = 2); or
(vI) an esteramide mixture consisting essentially of H₉C₄OOC-(CH₂)₄ -CO-N(CH₃)₂, H₉C₄OOC-(CH₂)₃-CO-N(CH₃)₂, and H₉C₄OOC-(CH₂)₂ -CO-N(CH₃)₂; or
(vII) mixtures thereof.

An exemplary embodiment of the variant listed above under section (I) is a diester mixture consisting essentially of:
- from 9 to 17 % by weight of dimethyladipate;
- from 59 to 67 % by weight of dimethylglutarate; and
- from 20 to 28 % by weight of dimethylsuccinate.

An example of a useful diester-based mixture wherein A is linear is RHODIASOLV® RPDE solvent, marketed by Solvay.

RHODIASOLV® RPDE solvent is a mixture of diesters comprising essentially (more than 70 wt %) of dimethylglutarate and dimethylsuccinate.

Diesters of formula (I_{de}) which can be used in the composition of the invention can be prepared notably according to the teachings of EP 1991519 A (RHODIA OPERATIONS) 19.11.2008 . Esteramides of formula (Iₑₐ) which can be used in the composition of the invention possibly in combination with diamides of formula (I_{da}), can be prepared notably according to the teachings of WO 2011/154661 (RHODIA OPERATIONS) 15.12.2011 and US 20110166025 (RHODIA OPERATIONS) 07.07.2011 .

The mixture (M) generally comprises at least 10 %, preferably at least 20 %, more preferably at least 30 % wt of said one or more diesters (I_{de}) and/or one of more esteramides (Iₑₐ), based on the total weight of the mixture (M).

When the mixture (M) comprises an esteramides (Iₑₐ), said mixture (M) will generally further comprise a diamide (I_{da}) in an amount of 0.1 to 10 % by weight over the cumulative weight of (Iₑₐ) and (I_{da}).

According to certain embodiments, mixture (M) comprises dimethylsulfoxide (DMSO) and at least one solvent selected from the group consisting of diesters of formula (I_{de}) and ester-amide of formula (Iₑₐ ).

The weight ratio between the solvents of formula (I_{de}) and (Iₑₐ) and DMSO, in these embodiments, is preferably from 1/99 to 99/1, preferably of from 20/80 to 80/20, more preferably of 70/30 to 30/70.

The skilled in the art will select the appropriate weight ratio for opportunely tuning properties of the mixture (M) in the inventive composition.

The mixture (M) may comprise, possibly in addition to the DMSO and the solvents of formula (I_{de}), (Iₑₐ) and possibly (I_{da}), at least one further solvent.

If used, the amount of said further solvent is generally lower than both the amount of optional DMSO and of overall amount of the solvents of formula (I_{de}), (Iₑₐ) and possibly (I_{da}). Still, the amount of said further solvent, when present, is preferably lower than 25 % wt, preferably lower than 20 % wt, more preferably lower than 15 % wt, even more preferably lower than 10 % wt, with respect to the total amount of DMSO and of solvents of formula (I_{de}). (Iₑₐ) and possibly (I_{da}).

Exemplary embodiments of further solvents which may be used in the mixture (M) of the composition of the present invention include notably:
- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane ; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols such as methyl alcohol, ethyl alcohol, diacetone alcohol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, γ-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

For embodiments wherein the mixture (M) comprises a further solvent, mixture (M) is preferably free from solvents qualified as Carcinogenic, Mutagenic or Toxic to Reproduction according to chemical safety classification (CMR solvents); more specifically, the mixture (M) is advantageously substantially free from NMP, DMF and DMAC.

Nevertheless, mixtures (M) substantially free from any further solvent different from DMSO and of solvents of formula (I_{de}), (Iₑₐ), (I_{da}), i.e. consisting essentially of solvents of formula (I_{de}) and (Iₑₐ), and possibly DMSO and/or (I_{da}) are those preferred.

Minor amount of impurities, solvent traces and residues might be present in the mixture (M) beside solvents of formula (I_{de}), (Iₑₐ) and possibly (I_{da}) and possibly DMSO, without these affecting the properties of the mixture (M). A total amount of said other components up to about 1 % wt, based on the total weight of mixture (M) is generally tolerated.

Preferably, the composition of the invention comprises only one polymer (P).

For the purpose of the invention, the expression "aromatic sulfone polymer (P)" is intended to denote any polymer, at least 50 % moles of the recurring units thereof comprise at least one group of formula -Ar-SO₂-Ar'-[recurring units (R_{SP})], with Ar and Ar', equal to or different from each other, being aromatic groups.

In a first embodiment of the invention, said recurring units R_{SP} of aromatic sulfone polymer (P) are recurring units (R_{SP-1}), in their imide form (R_{SP-1} -A) and/or amic acid forms [(R_{SP-1}-B) and (R_{SP-1}-C)] : 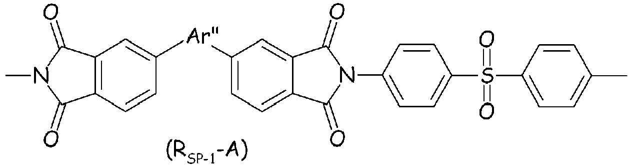 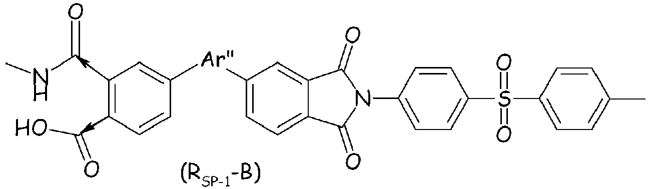 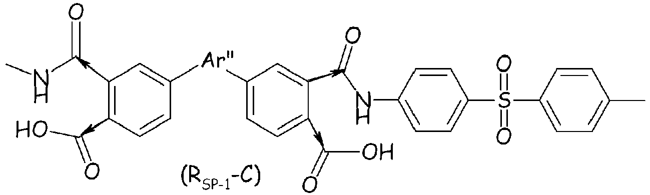 wherein :
the → denotes isomerism so that in any recurring unit the groups to which the arrows point may exist as shown or in an interchanged position;
Ar" is selected from the group consisting of: 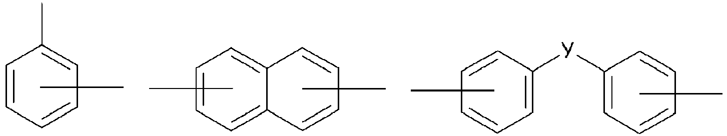 and corresponding optionally substituted structures, with Y being -O-, -C(O)-, -(CH₂)ₙ-, -C(CF₃)₂-, -(CF₂)ₙ-, with n being an integer from 1 to 5, and mixtures thereof.

In a second preferred embodiment of the invention, recurring units (R_{SP}) of the polymer (P) preferably are recurring units (R_{SP-2}) complying with formula :

-Ar¹-(T'-Ar²)ₙ-O-Ar³-SO₂-[Ar⁴-(T-Ar²)ₙ-SO₂]ₘ-Ar⁵-O-(R_{SP-2})

wherein:
- Ar¹, Ar², Ar³, Ar⁴, and Ar⁵, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, -CH₂-, -C(O)-, -C(CH₃)₂-, -C(CF₃)₂-, -C(=CCl₂)-, -SO ₂-, -C(CH₃)(CH₂CH₂COOH)-, and a group of formula: 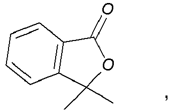 and
   preferably T is selected from the group consisting of a bond, -CH₂-, -C(O)-, -C(CH₃)₂-, -C(CF₃)₂-, -C(=CCl₂)-, -C(CH₃)(CH₂CH₂COOH)-, and a group of formula: 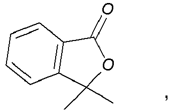 and
- n and m, equal to or different from each other, are independently zero or an integer of 1 to 5.

The sulfone polymer of this second preferred embodiment is an ether sulfone polymer.

Aromatic sulfone polymer (SP) according to the second preferred embodiment of the invention comprises at least 50 % moles, preferably 70 % moles, more preferably 75 % moles of recurring units (R_{SP-2}), still more preferably, it contains no recurring unit other than recurring units (R_{SP-2}), as above detailed.

Recurring units (R_{SP-2}) of the polymer (P) according to this preferred embodiment can be notably selected from the group consisting of those of formulae (S-A) to (S-D) herein below: 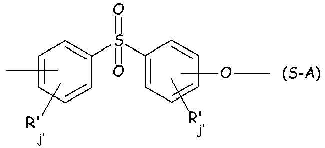 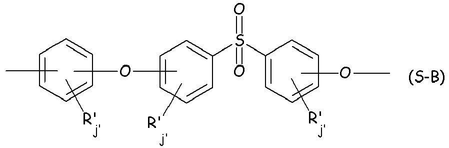 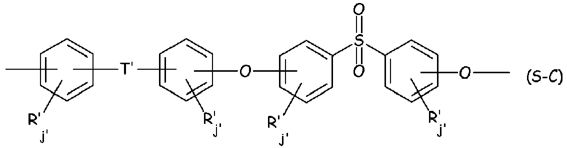 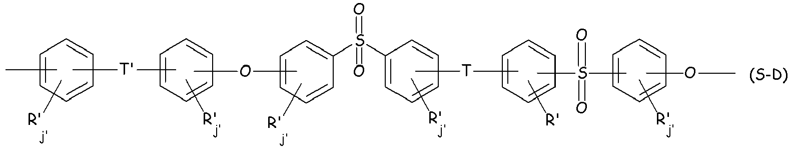 wherein:
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- T and T', equal to or different from each other are a bond or a divalent group optionally comprising one or more than one heteroatom; preferably T' is selected from the group consisting of a bond, -CH₂-, -C(O)-, -C(CH₃)₂ -, -C(CF₃)₂-, -C(=CCl₂)-, -C(CH₃)(CH₂CH₂COOH)-, -SO₂-, and a group of formula: 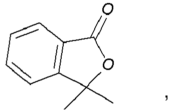 and
   preferably T is selected from the group consisting of a bond, -CH₂-, -C(O)-, -C(CH₃)₂-, -C(CF₃)₂-, -C(=CCl₂)-, -C(CH₃)(CH₂CH₂COOH)-, and a group of formula: 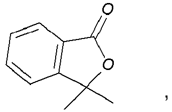 and
- j' is zero or is an integer from 0 to 4.

The aromatic sulfone polymer (P) has typically a glass transition temperature of advantageously at least 150°C, preferably at least 160°C, more preferably at least 175°C.

Recurring units (R_{SP}) of formula (S-D) are preferably selected from the group consisting of the following recurring units: 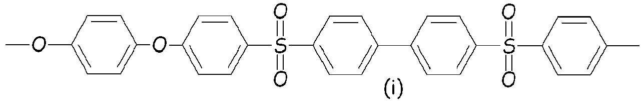 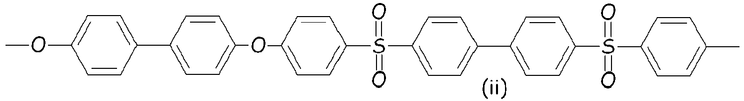 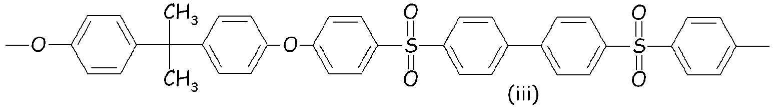 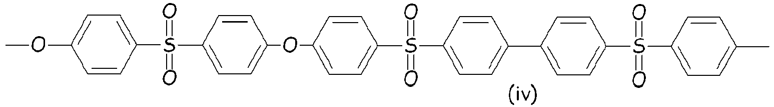 and mixtures thereof.

Recurring units (R_{SP}) complying with formula (S-C), as above detailed, are preferably selected from the group consisting of the following units: 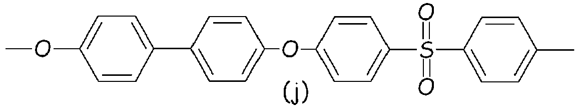 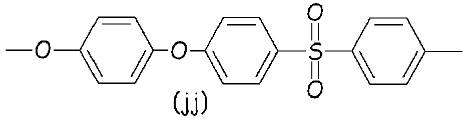 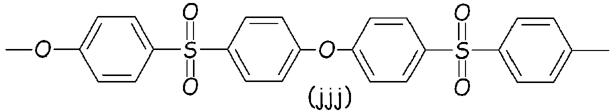 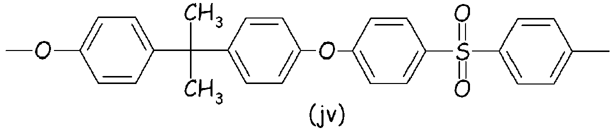 and mixtures thereof.

Good results were obtained with aromatic sulfone polymer (SP) the recurring units of which are recurring units (ii) (polybiphenyldisulfone, herein after), with aromatic sulfone polymer (SP) the recurring units of which are recurring units (j) (polyphenylsulfone or PPSU, hereinafter), with aromatic sulfone polymer (SP) the recurring units of which are recurring units (jj) (polyetherethersulfone, hereinafter), with aromatic sulfone polymer (SP) the recurring units of which are recurring units (jjj) and, optionally in addition, recurring units (jj) (polyethersulfone or PES, hereinafter), and with aromatic sulfone polymer (SP) the recurring units of which are recurring units (jv) and, optionally in addition, recurring units (jj) (polysulfone, or PSF hereinafter).

Polyphenylsulfone (PPSU) is notably available as RADEL® R PPSU from Solvay Specialty Polymers USA, L.L.C. Polysulfone (PSF) is notably available as UDEL® PSF fromSolvay Specialty Polymers USA, L.L.C. Polyethersulfone (PES) is notably available as RADEL® A PES or as VIRANTAGE® r-PES from Solvay Specialty Polymers USA, L.L.C..

Very good results have been obtained with polyethersulfone (PES), i.e. with aromatic sulfone polymer (SP) the recurring units of which are recurring units (jjj) and, optionally in addition, recurring units (jj).

The sulfone polymer solution [solution (SP)] can be prepared in step (i) by any conventional manner. For instance, the mixture (M) can be added to the polymer (P), or, preferably, the polymer (P) can be added to the mixture (M), or even the polymer (P) and the mixture (M) can be simultaneously combined.

The solution (SP) is prepared at a temperature of advantageously at least 25°C, preferably at least 30°C, more preferably at least 40°C and even more preferably at least 50°C. The solution (SP) is prepared at a temperature of advantageously less than 180°C, preferably less than 170°C, more preferably less than 160°C, and even more preferably less than 150°C. Higher temperatures can of course be used for the solution (SP) preparation step (i), however they are not preferred from a practical and/or economical point of view.

The overall concentration of the polymer (P) in the solution (SP) should be at least 10% by weight, preferably at least 12% by weight, based on the total weight of the solution. Typically the concentration of the polymer (P) in the solution does not exceed 50% by weight, preferably it does not exceed 40% by weight, more preferably it does not exceed 30% by weight, based on the total weight of the solution (SP).

The solution (SP) may contain additional components, such as pore forming agents, nucleating agents, fillers and the like. Suitable pore forming agents are for instance polyvinylpyrrolidone (PVP), and polyethyleneglycol (PEG), with PVP being preferred. When added to the solution (SP) in amounts typically ranging from 0.1 to 5% by weight, preferably from 0.5 to 3% by weight, transparent homogeneous solutions are obtained. Pore forming agents are generally at least partially, if not completely, removed from the membrane in the non-solvent bath in step (iii).

The mixing time required to obtain the solution (SP) can vary widely depending upon the rate of solution of the components, the temperature, the efficiency of the mixing apparatus, the viscosity of the solution (SP) being prepared, and the like. Any suitable mixing equipment may be used. Preferably, the mixing equipment is selected to reduce the amount of air entrapped in the solution (SP) which may cause defects in the final membrane. The mixing of the polymer (P) and the mixture (M) may be conveniently carried out in a sealed container, optionally held under an inert atmosphere. Inert atmosphere, and more precisely nitrogen atmosphere has been found particularly advantageous for the preparation of solution (SP) comprising PVP.

In general the solubility of the polymer (P) in the solvent mixture (M) at the temperature of the solution during the step (ii) of the method of the invention should be greater than 10% by weight, preferably greater than 12% by weight, more preferably greater than 15% by weight, with respect to the total weight of the solution.

The term "solubility" is defined herein as the maximum amount of polymer, measured in terms of weight of the polymer per weight of solution, which dissolves at a given temperature affording a transparent homogeneous solution without the presence of any phase separation in the system.

Further in addition, a limited amount of a non-solvent for polymer (P) may be added to solution (SP) obtained in step (i), in an amount generally below the level required to reach the cloud point (less than 40 % wt, preferably less than 25 % wt, based on the weight of solution (SP) . Such non-solvent will be generally the same as the one used in step (iii) of the process. Non-solvent will thus be described in step (iii) below. Without being bound by this theory, it is generally understood that the addition of an amount of non-solvent in solution (SP) will increase the rate of demixing/coagulation in step (iii), so as to provide a more advantageous membrane morphology.

Once a homogenous and transparent solution (SP) is prepared, the solution (SP) is processed into a film.

The term "film" is used herein to refer to the layer of solution (SP) obtained after the processing of the same. Depending on the final form of the membrane the film may be either flat, when flat membranes are required, or tubular in shape, when tubular or hollow fiber membranes are to be obtained.

The temperature of the solution during the processing step (ii) may be or may be not the same as the temperature during the solution preparation step (i). The temperature of the solution during the processing step (ii) typically does not exceed 180°C, preferably it does not exceed 170°C, more preferably it does not exceed 160°C, even more preferably it does not exceed 150°C.

During the processing step (ii) the solution (SP), lower boundary for the processing temperature are not critical, provided that the solution (SP) still maintains adequate solubility and viscosity properties. Ambient temperature can be notably used.

The viscosity of the solution (SP) at the temperature of the processing step (ii) is typically at least 1 Pa.s. The viscosity of the solution (SP) in said conditions typically does not exceed 100 Pa.s.

Conventional techniques can be used for processing the solution (SP) into a film, being understood that casting techniques are preferred.

Different casting techniques are used depending on the final form of the membrane to be manufactured. When the final product is a flat membrane the polymer solution is cast as a film over a flat support, typically a plate, a belt or a fabric, or another microporous supporting membrane, by means of a casting knife or a draw-down bar.

Accordingly, in its first embodiment the method of the invention comprises a step (ii) of casting the solution (SP) into a flat film on a support.

Hollow fibers and capillary membranes can be obtained by the so-called wet-spinning process. In such a process the solution (SP) is generally pumped through a spinneret, that is an annular nozzle comprising at least two concentric capillaries: a first outer capillary for the passage of the solution (SP) and a second inner one for the passage of a supporting fluid, generally referred to as "lumen". The lumen acts as the support for the casting of the solution (SP) and maintains the bore of the hollow fiber or capillary precursor open. The lumen may be a gas, or, preferably, a liquid at the conditions of the spinning of the fiber. The selection of the lumen and its temperature depends on the required characteristics of the final membrane as they may have a significant effect on the size and distribution of the pores in the membrane. In general the lumen is not a strong non-solvent for the polymer (P) or, alternatively, it contains a solvent or weak solvent for the polymer (P). The lumen is typically miscible with the non-solvent and with the solvent for the polymer (P). The temperature of the lumen generally approximates the temperature of the solution (SP).

At the exit of the spinneret, after a short residence time in air or in a controlled atmosphere, the hollow fiber or capillary precursor is immersed in the non-solvent bath wherein the polymer precipitates forming the hollow fiber or capillary membrane.

Accordingly, in its second embodiment the process of the invention comprises a step (ii) of casting the polymer solution into a tubular film around a supporting fluid.

The casting of the polymer solution is typically done through a spinneret. The supporting fluid forms the bore of the final hollow fiber or capillary membrane. When the supporting fluid is a liquid, immersion of the fiber precursor in the non-solvent bath also advantageously removes the supporting fluid from the interior of the fiber.

Tubular membranes, because of their larger diameter, are produced using a different process from the one employed for the production of hollow fiber membranes.

In its third embodiment the process of the invention comprises a step (ii) of casting the polymer solution into a tubular film over a supporting tubular material.

After the processing of the solution (SP) has been completed so as to obtain a film, in whichever form, as above detailed, said film is immersed into a non-solvent bath in step (iii). This step is generally effective for inducing the precipitation of the polymer (P) from the solution (SP). The precipitated polymer (P) thus advantageously forms the final membrane structure.

As used herein the term "non-solvent" is taken to indicate a substance incapable of dissolving a given component of a solution or mixture.

Suitable non-solvents for the polymer (P) are water and aliphatic alcohols, preferably, aliphatic alcohols having a short chain, for example from 1 to 6 carbon atoms, more preferably methanol, ethanol and isopropanol. Blends of said preferred non-solvents, i.e. comprising water and one or more aliphatic alcohols can be used. Preferably, the non-solvent of the non-solvent bath is selected from the group consisting of water, - aliphatic alcohols as above defined, and mixture thereof. Further in addition, the non-solvent bath can comprise in addition to the non-solvent (e.g. in addition to water, to aliphatic alcohol or to mixture of water and aliphatic alcohols, as above detailed) small amounts (typically of up to 40 % wt, with respect to the total weight of the non-solvent bath, generally 25 to 40 % wt)) of a solvent for the polymer (P). Use of solvent/non-solvent mixtures advantageously allows controlling the porosity of the membrane. The non-solvent is generally selected among those miscible with the mixture (M) used for the preparation of the solution (SP). Preferably the non-solvent in the process of the invention is water. Water is the most inexpensive non-solvent and it can be used in large amounts. The mixture (M) is advantageously miscible and soluble in water, which is an additional advantage of the method of the present invention.

The non-solvent in the precipitation bath is usually held at a temperature of at least 0°C, preferably of at least 15°C, more preferably of at least 20°C. The non-solvent in the precipitation bath is usually held at a temperature of less than 90°C, preferably of less than 70°C, more preferably of less than 60°C.

The temperature gradient between the cast film and the non-solvent bath may influence the pore size and/or pore distribution in the final membrane as it affects the rate of precipitation of the polymer (P) from the solution (SP). If precipitation is rapid, a skin will generally form on the surface of the cast film in contact with the non-solvent which will typically slow down the diffusion of the non-solvent in the bulk of the polymer solution leading to a membrane with an asymmetric structure. If precipitation is slow, the pore-forming liquid droplets of the solvent-rich liquid phase, which forms upon contact with the non-solvent, usually tend to agglomerate while the polymer solution is still fluid. As a consequence the membrane will have a more homogeneous, symmetrical structure. The appropriate temperature of the non-solvent bath can be determined for each specific case with routine experiments.

Once removed from the precipitation bath the membrane may undergo additional treatments, for instance rinsing. As a last step the membrane is typically dried.

The invention further pertains to a membrane obtained by the method as above described.

The membrane obtained from the process of the invention is preferably a porous membrane. Typically the membrane has an asymmetric structure. The porosity of the membrane may range from 3 to 90%, preferably from 5 to 80%.

The pores may have an average diameter of at least 0.001 µm, of at least 0.005 µm, of at least 0.01 µm, of at least 0.1 µm, of at least 1 µm, of at least 10 µm and of at most 50 µm. Suitable techniques for the determination of the average pore size in porous membranes are described for instance in "Membranes and Membrane Separation Processes", by H. Strathmann in "Ullmann's Encyclopedia of Industrial Chemistry", 7th edition, published by John Wiley & Sons, Inc. (DOI: 10.1002/14356007.a16_187.pub2).

Should the disclosure of any patents, patent applications, and publications which are incorporated herein by reference conflict with the description of the present application to the extent that it may render a term unclear, the present description shall take precedence.

The invention will be now described in more details with reference to the following examples, whose purpose is merely illustrative and not intended to limit the scope of the invention.

### Raw materials

- the ester-amide (EA) is a mixture comprising an ester-amide of formula MeO-C(O)-CH(Me)-CH₂CH₂C(O)-NMe₂ and minor amounts of MeO-C(O)-CH(Et)-CH₂-C(O)-NMe₂ and possibly Me₂N-C(O)-CH(Me)-CH₂ CH₂C(O)-NMe₂ and/or Me₂N-C(O)-CH(Et)-CH₂-C(O)-NMe₂ with Me = methyl, commercially available from Solvay under trade name POLAR CLEAN^{(R)};
- the diester (DE) is a mixture of diesters comprising essentially (more than 80 wt %) of dimethyl-ethylsuccinate and dimethyl-2-methylglutarate, commercially available from Solvay under trade name RHODIASOLV® IRIS;
- PES is VERADEL® PES 3000MP, a polyethersulfone polymer commercially available from Solvay Specialty Polymers USA, LLC;
- PSU is a polysulfone polymer commercially available under trade name UDEL® from from Solvay Specialty Polymers USA, LLC;
- PVP is a polyvinylpyrrolidone polymer.

### Preliminary investigation on solubility:

An initial solubility study was carried out for assessing solubility of PES and PSU, as above detailed in ester-amide (EA) and in a mixture of diester (DE), as above detailed, in admixture (50/50 wt/wt) with DMSO. PES was found to be soluble at 10 % wt in both solvent mixtures at ambient temperature.

PSU was found to be soluble at 10% wt in both solvent mixtures upon heating at about 120°C. Solubility was maintained at room temperature at least for ester-amide (EA) solvents mixture.

Because of this solubility behaviour both solvents mixtures were found to be appropriate to manufacture solutions suitable for further processing under the form of membranes.

### General procedure for the manufacture of the solution of sulfone polymer for membrane manufacture.

In a mixer equipped with a deflocculating blade, solvent EA, as above detailed was desareated and heated at 80°C; once achieved this temperature the PVP was firstly introduced and agitated at 500 rpm for 20-30 min. Then, PES was added maintaining stirring at 500 rpm during addition, and then continuing agitation at 80 °C and 200 rpm for 40 to 60 minutes. Clear solutions containing 16 % or 20 % wt of PES and 5 % wt of PVP were obtained. Stability of said homogeneous solutions at room temperature was verified by visual inspection after 3 days storage: no phase separation nor crystallization was observed.

Viscosity of the so obtained solution was found to be less than 100 Pa x sec at room temperature (25°C) and remained unchanged after 3 days storage.

Results on the preparation of the solutions, as above described, clearly demonstrate suitability of solutions, as above detailed, both in terms of storage capabilities and in terms of viscosities, of being advantageously used for obtaining films by conventional liquid processing techniques. Further, in addition, miscibility of solvent used is particularly advantageous for achieving efficient coagulation in conventional non-solvent baths, so ensuring obtaining membranes of appropriate structure.

Similarly a 20 % wt PES and 5 % wt PVP solution in a mixture of diester (DE), as above detailed, in admixture (50/50 wt/wt) with DMSO was prepared.

### Procedure for casting a film and coagulating the membrane in a non-solvent bath

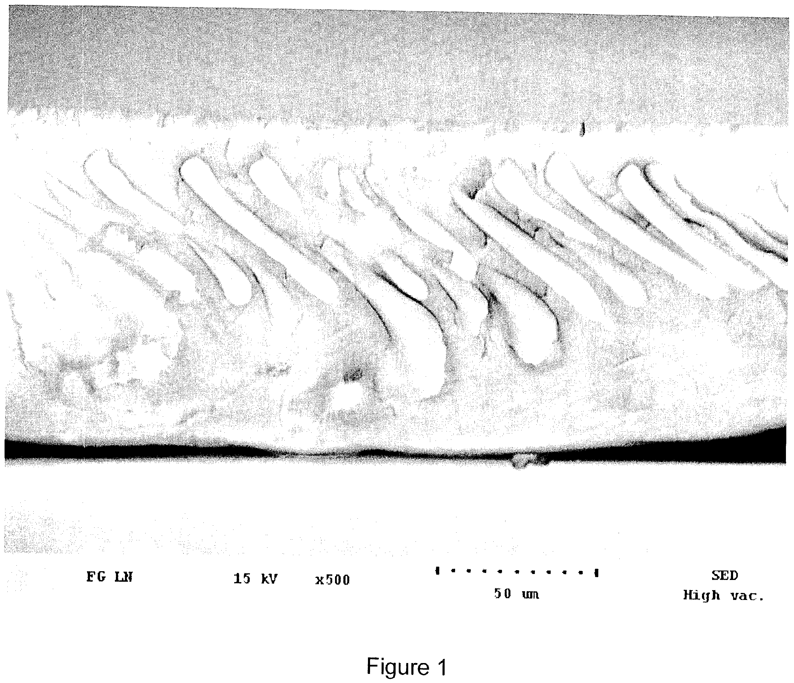

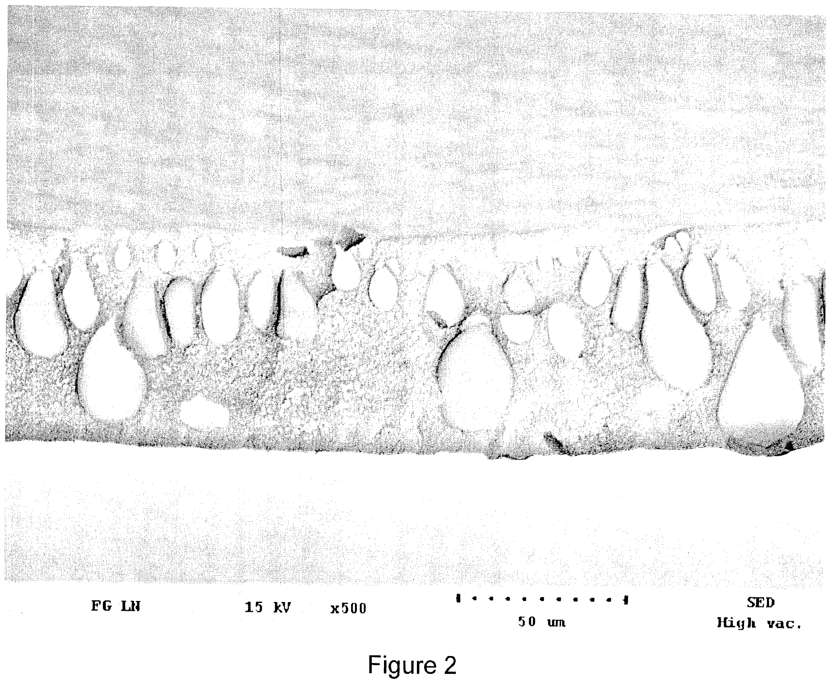

Solutions of PES and PVP, obtained as above detailed in both solvent EA and in a mixture of DE and DMSO were processed with a casting knife over a support foil for obtaining a film. The so obtained films were immersed in a water bath for coagulating the polymer and removing substantially PVP. Porous membranes having a thickness of about 100 µm were obtained; a microscope picture (magnification= 1:500) of a cut-off in the thickness direction thereof is shown respectively in Figure 1 (membrane from solvent EA) and Figure 2 (membrane from solvent DE + DMSO).

## Claims

1. A method for manufacturing a sulfone polymer membrane comprising the steps of:
(i) preparing a sulfone polymer solution [solution (SP)] comprising:
- at least one sulfone polymer [polymer (P)];
- a solvent mixture [mixture (M)] comprising:
at least one solvent selected from the group consisting of diesters of formula (I_{de}) and ester-amide of formula (lea), and optionally comprising at least one diamide of formula (I_{da}) selected from the group consisting of:
(a) at least one of the diester (I'_{de}) and at least one diester (I"_{de}), possibly in combination with at least one diester of formula (II_{de}); or
(b) at least one of the esteramide (I'ₑₐ) and at least one esteramide (I"ₑₐ), possibly in combination with at least one esteramide of formula (IIₑₐ); or
(c) at least one of the esteramide (I'ₑₐ), at least one diamide (I'_{da}), at least one esteramide (I"ₑₐ) and at least one diamide (I"_{da}), possibly in combination with at least one esteramide of formula (IIₑₐ) and/or at least one diamide of formula (II_{da}); or
(iv) combinations of (a) with (b) and/or (c), wherein:
- (I'_{de}) is R¹-OOC-A_{MG}-COO-R²
- (I'ₑₐ) is R¹-OOC-A_{MG}-CO-NR³R⁴
- (I'_{da}) is R⁵R⁶N-OC-A_{MG}-CO-NR⁵R⁶
- (I"_{de}) is R¹-OOC-A_{ES}-COO-R²
- (I"ₑₐ) is R⁵R⁶N-OC-A_{ES}-CO-NR⁵R⁶; and
- (II_{de}) is R¹OOC-(CH₂)₄-COO-R²,
- (IIₑₐ) is R¹OOC-(CH₂)₄-CO-NR³R⁴,
- (II_{da}) is R⁵R⁶N-OC-(CH₂)₄-CO-NR⁵R⁶,
wherein:
- A_{MG} is of formula MGa -CH(CH₃)-CH₂-CH₂- or MG_{b} -CH₂-CH₂-CH(CH₃)-,
- A_{ES} is of formula ESₐ -CH(C₂H₅)-CH₂-, or ES_{b} -CH₂-CH(C₂H₅)-; and wherein R¹ and R², equal to or different from each other, are independently selected from the group consisting of C₁-C₂₀ alkyl, C₁-C₂₀ aryl, C₁-C₂₀ alkyaryl, C₁-C₂₀ arylalkyl groups;
- R³, R⁴, R⁵ and R⁶, equal to or different from each other and at each occurrence, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both (1) R³ and R⁴ or R⁵ and R⁶ and (2) the nitrogen atom to which they are bound, said cyclic moieties possibly comprising one or more than one heteroatom, e.g. an oxygen atom or an additional nitrogen atom,
and optionally dimethylsulfoxide (DMSO);
(ii) processing said solution (SP) into a film;
(iii) immersing said film in a non-solvent bath.

2. The method of claim 1, wherein mixture (M) is substantially free any further solvent different from DMSO and of solvents of formula (I_{de}), (Iₑₐ), (I_{da}), i.e. consists essentially of solvents of formula (I_{de}) and (Iₑₐ), and possibly DMSO and/or (I_{da}).

3. The method of claim 1 or 2, wherein at least 50 % moles of the recurring units of said polymer (P) comprise at least one group of formula -Ar-SO₂-Ar'-[recurring units (R_{SP})], with Ar and Ar', equal to or different from each other, being aromatic groups, preferably wheren said recurring units (R_{SP}) are recurring units (R_{SP-2}) complying with formula :
-Ar¹-(T'-Ar²)ₙ-O-Ar³-SO₂-[Ar⁴-(T-Ar²)ₙ-SO₂]ₘ-Ar⁵-O- (R_{SP-2})
wherein:
- Ar¹, Ar², Ar³, Ar⁴, and Ar⁵, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, -CH₂-, -C(O)-, -C(CH₃)₂-, -C(CF₃)₂-, -C(=CCl₂)-, -SO₂-, - C(CH₃)(CH₂CH₂COOH)-, and a group of formula: 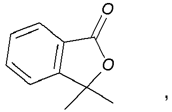 and
preferably T is selected from the group consisting of a bond, -CH₂-, -C(O)-, - C(CH₃)₂-, -C(CF₃)₂-, -C(=CCl₂)-, -C(CH₃)(CH₂CH₂COOH)-, and a group of formula: 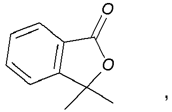 and
- n and m, equal to or different from each other, are independently zero or an integer of 1 to 5.

4. The method of claim 3, wherein the recurring units (R_{SP-2}) of the polymer (P) are selected from the group consisting of those of formulae (S-A) to (S-D) herein below: 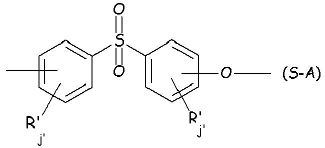 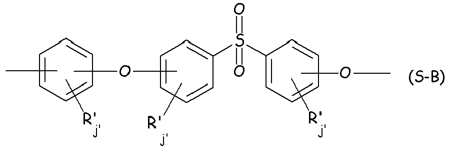 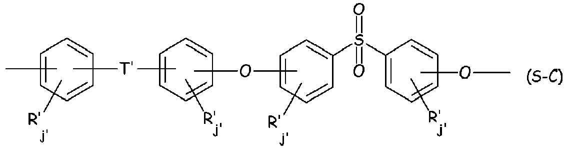 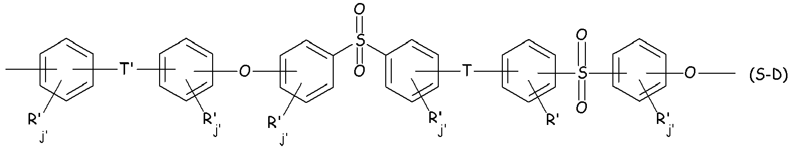 wherein:
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- T and T', equal to or different from each other are a bond or a divalent group optionally comprising one or more than one heteroatom; preferably T' is selected from the group consisting of a bond, -CH₂-, -C(O)-, -C(CH₃)₂-, - C(CF₃)₂-, -C(=CCl₂)-, -C(CH₃)(CH₂CH₂COOH)-, -SO₂-, and a group of formula: 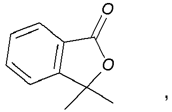 and
preferably T is selected from the group consisting of a bond, -CH₂-, -C(O)-, - C(CH₃)₂-, -C(CF₃)₂-, -C(=CCl₂)-, -C(CH₃)(CH₂CH₂COOH)-, and a group of formula: 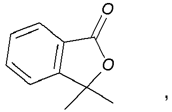 and - j'
is zero or is an integer from 0 to 4.

5. The method of claim 4, wherein the recurring units (R_{SP-2}) of the polymer (P) are recurring units of formula (S-C) selected from the group consisting of the following units: 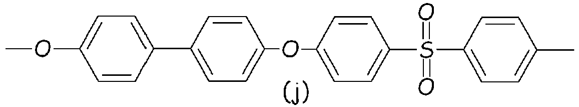 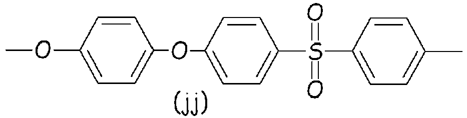 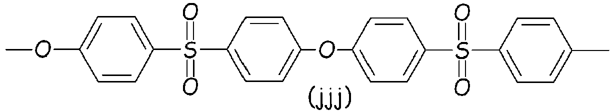 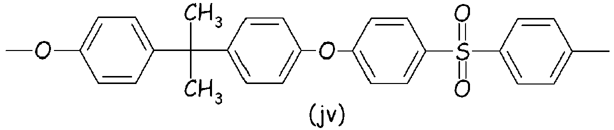 and mixtures thereof.

6. The method of anyone of claims 1 to 5, wherein the overall concentration of the polymer (P) in the solution (SP) is at least 10% by weight, preferably at least 12% by weight, based on the total weight of the solution (SP).

7. The method of anyone of claims 1 to 6, wherein the solution (SP) contains pore forming agents selected from the group consisting of polyvinylpyrrolidone (PVP), and polyethyleneglycol (PEG).

8. The method of anyone of claims 1 to 7, said method comprising a step (ii) of casting the solution (SP) into a flat film on a support.

9. The method of anyone of claims 1 to 7, said method comprising a step (ii) of casting the polymer solution into a tubular film around a supporting fluid.

10. The method of anyone of claims 1 to 7, said method comprising a step (ii) of casting the polymer solution into a tubular film over a supporting tubular material.

11. The method of anyone of claims 1 to 10, wherein in step (iii) the non-solvent of the non-solvent bath is selected from the group consisting of:
- water,
- aliphatic alcohols, preferably, aliphatic alcohols having a short chain, for example from 1 to 6 carbon atoms, more preferably methanol, ethanol and isopropanol, and
- mixture thereof.

12. The method of claim 11, wherein the non-solvent bath additionally comprises amounts of up to 40 % wt, with respect to the total weight of the non-solvent bath, of a solvent for the polymer (P).

## Patentansprüche

1. Verfahren zur Herstellung einer Sulfonpolymermembran, das folgende Schritte umfasst:
(i) Herstellen einer Sulfonpolymerlösung [Lösung (SP)], umfassend:
- mindestens ein Sulfonpolymer [Polymer (P)];
- eine Lösungsmittelmischung [Mischung (M)], umfassend:
mindestens ein Lösungsmittel aus der Gruppe bestehend aus Diestern der Formel (I_{de}) und Esteramiden der Formel (Iₑₐ) und gegebenenfalls umfassend mindestens ein Diamid der Formel (I_{da}), ausgewählt aus der Gruppe bestehend aus:
(a) mindestens einem der Diester (I'_{de}) und mindestens einem Diester (I"_{de}), gegebenenfalls in Kombination mit mindestens einem Diester der Formel (II_{de}); oder
(b) mindestens einem der Esteramide (I'ₑₐ) und mindestens einem Esteramid (I"ₑₐ), gegebenenfalls in Kombination mit mindestens einem Esteramid der Formel (IIₑₐ); oder
(c) mindestens einem der Esteramide (I'ₑₐ), mindestens einem Diamid (I'_{da}), mindestens einem Esteramid (I"ₑₐ) und mindestens einem Diamid (I"_{da}), gegebenenfalls in Kombination mit mindestens einem Esteramid der Formel (IIₑₐ) und/oder mindestens einem Diamid der Formel (II_{da});
oder
(iv) Kombinationen von (a) mit (b) und/oder (c),
wobei:
- (I'_{de}) für R¹-OOC-A_{MG}-COO-R² steht,
- (I'ₑₐ) für R1-OOC-A_{MG}-CO-NR³R⁴ steht,
- (I'_{da}) für R⁵R⁶N-OC-A_{MG}-CO-NR⁵R⁶ steht,
- (I"_{de}) für R¹-OOC-A_{ES}-COO-R² steht,
- (I"ₑₐ) für R⁵R⁶N-OC-A_{ES}-CO-NR⁵R⁶ steht und
- (II_{de}) für R¹-OOC- (CH₂)₄-COO-R² steht,
- (IIₑₐ) für R¹-OOC-(CH₂)₄-CO-NR³R⁴ steht,
- (II_{da}) für R⁵R⁶N-OC-(CH₂)₄-CO-NR⁵R⁶ steht,
wobei:
- A_{MG} die Formel MGₐ-CH(CH₃)-CH₂-CH₂- oder MG_{b}-CH₂-CH₂-CH(CH₃)- aufweist,
- A_{ES} die Formel ESₐ-CH(C₂H₅)-CH₂- oder ES_{b}-CH₂-CH(C₂H₅)- aufweist; und wobei
- R¹ und R² gleich oder voneinander verschieden sind und unabhängig voneinander aus der Gruppe bestehend aus C₁-C₂-Alkyl-, C₁-C₂-Aryl-, C₁-C₂₀-Alkylaryl-, C₁-C₂₀-Arylalkylgruppen ausgewählt sind;
- R³, R⁴, R⁵ und R⁶ gleich oder voneinander verschieden sind und bei jedem Auftreten aus der Gruppe bestehend aus C₁-C₂₀-Alkyl-, C₁-C₂₀-Aryl-, C₁-C₂₀-Alkylaryl-, C₁-C₂₀-Arylalkylgruppen ausgewählt sind, wobei alle diese Gruppen gegebenenfalls einen oder mehr als einen Substituenten umfassen, gegebenenfalls ein oder mehr als ein Heteroatom aufweisen und bei cyclischen Gruppierungen, die sowohl (1) R³ und R⁴ bzw. R⁵ und R⁶ als auch (2) das Stickstoffatom, an das sie gebunden sind, umfassen, die cyclischen Gruppierungen gegebenenfalls ein oder mehr als ein Heteroatom, z.B. ein Sauerstoffatom oder ein zusätzliches Stickstoffatom, umfassen,
und gegebenenfalls Dimethylsulfoxid (DMSO);
(ii) Verarbeiten der Lösung (SP) zu einem Film;
(iii) Eintauchen des Films in ein Nichtlösungsmittelbad.

2. Verfahren nach Anspruch 1, bei dem die Mischung (M) weitgehend frei von jeglichem weiteren Lösungsmittel, das von DMSO und Lösungsmitteln der Formel (I_{de}), (Iₑₐ), (I_{da}) verschieden ist, ist, d. h. im Wesentlichen aus Lösungsmitteln der Formel (I_{de}) und (Iₑₐ) und gegebenenfalls DMSO und/oder (I_{da}) besteht.

3. Verfahren nach einem der Ansprüche 1 oder 2, wobei mindestens 50 Mol-% der Wiederholungseinheiten des Polymers (P) mindestens eine Gruppe der Formel -Ar-SO₂-Ar'- umfassen [Wiederholungseinheiten (R_{SP})], wobei Ar und Ar' gleich oder voneinander verschieden sind und für aromatische Gruppen stehen, vorzugsweise wobei es sich bei den Wiederholungseinheiten (R_{SP}) um Wiederholungseinheiten (R_{SP-2}) handelt, die der folgenden Formel entsprechen:
Ar¹-(T'-Ar²)ₙ-O-Ar³-SO₂-[Ar⁴-(T-Ar²)ₙ-SO₂]ₘ-Ar⁵-O-(R_{SP-2})
wobei:
- Ar¹, Ar², Ar³, Ar⁴ und Ar⁵ gleich oder voneinander verschieden sind und bei jedem Auftreten unabhängig für eine aromatische ein- oder mehrkernige Gruppe stehen;
T und T' gleich oder voneinander verschieden sind und bei jedem Auftreten unabhängig für eine Bindung oder eine zweiwertige Gruppe, die gegebenenfalls ein oder mehr als ein Heteroatom umfasst, steht; vorzugsweise T' aus der Gruppe bestehend aus einer Bindung, -CH₂-, -C(O)--C(CH₃)₂-, -C(CF₃)₂-, -C(=CCl₂)-, -SO₂-, -C(CH₃)(CH₂CH₂COOH)- und einer Gruppe der Formel: 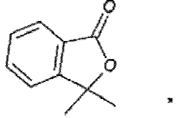 ausgewählt ist und vorzugsweise T aus der Gruppe bestehend aus einer Bindung, -CH₂-, -C(0)-, -C(CH₃)₂-, -C(CF₃)₂-, -C(=CCl₂)-, -C(CH₃)(CH₂CH₂COOH)- und einer Gruppe der Formel: 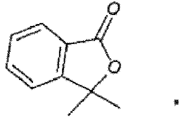 ausgewählt ist, und
- n und m gleich oder voneinander verschieden sind und unabhängig für null oder eine ganze Zahl von 1 bis 5 stehen.

4. Verfahren nach Anspruch 3, bei dem die Wiederholungseinheiten (R_{SP-2}) des Polymers (P) aus der Gruppe bestehend aus denjenigen der nachstehenden Formeln (S-A) bis (S-D) ausgewählt sind: 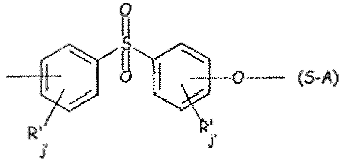 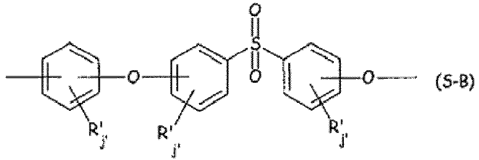 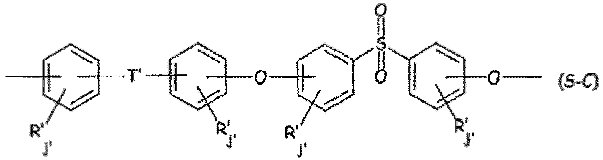 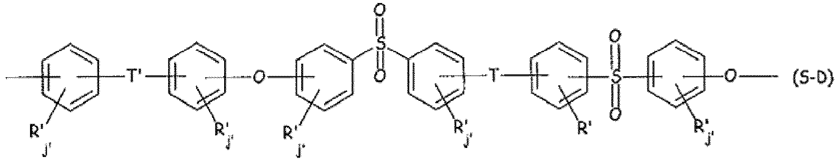 wobei:
- R' jeweils gleich oder voneinander verschieden ist und aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium ausgewählt ist;
- T und T' gleich oder voneinander verschieden sind und für eine Bindung oder eine zweiwertige Gruppe, die gegebenenfalls ein oder mehr als ein Heteroatom umfasst, steht; vorzugsweise T' aus der Gruppe bestehend aus einer Bindung, -CH₂-, -C(O)-, -C(CH₃)₂-, -C(CF₃)₂-, -C(=CCl₂)-, -C(CH₃) (CH₂CH₂COOH)-, -SO₂- und einer Gruppe der Formel: 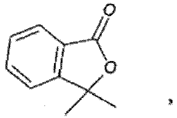 ausgewählt ist und vorzugsweise T aus der Gruppe bestehend aus einer Bindung, -CH₂-, -C(O)-, -C(CH₃)₂-, -C(CF₃)₂-, -C(=CCl₂)-, -C(CH₃) (CH₂CH₂COOH)- und einer Gruppe der Formel: 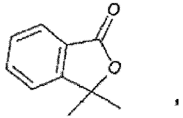 ausgewählt ist, und
- j' für null oder eine ganze Zahl von 0 bis 4 steht.

5. Verfahren nach Anspruch 4, bei dem es sich bei den Wiederholungseinheiten (R_{SP-2}) des Polymers (P) um Wiederholungseinheiten der Formel (S-C) handelt, die aus der aus den folgenden Einheiten bestehenden Gruppe: 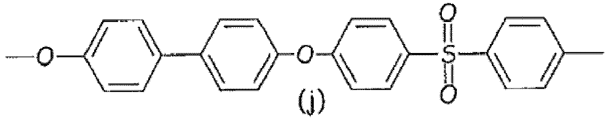 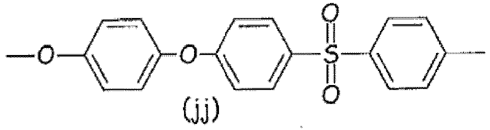 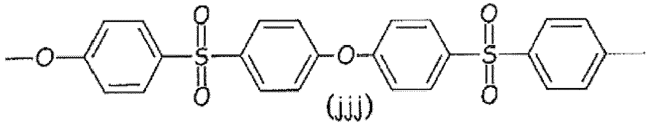 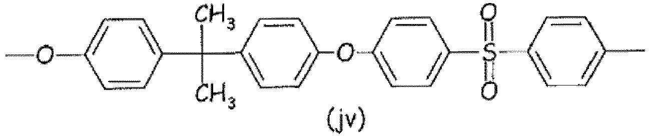 und Mischungen davon ausgewählt ist.

6. Verfahren nach einem der Ansprüche 1 bis 5, bei dem die Gesamtkonzentration des Polymers (P) in der Lösung (SP) mindestens 10 Gew.-%, vorzugsweise mindestens 12 Gew.-%, bezogen auf das Gesamtgewicht der Lösung (SP), beträgt.

7. Verfahren nach einem der Ansprüche 1 bis 6, bei dem die Lösung (SP) Porenbildner aus der Gruppe bestehend aus Polyvinylpyrrolidon (PVP) und Polyethylenglykol (PEG) enthält.

8. Verfahren nach einem der Ansprüche 1 bis 7, bei dem das Verfahren einen Schritt (ii) des Gießens der Lösung (SP) zu einem flachen Film auf einem Träger umfasst.

9. Verfahren nach einem der Ansprüche 1 bis 7, bei dem das Verfahren einen Schritt (ii) des Gießens der Polymerlösung zu einem rohrförmigen Film um ein Trägerfluid herum umfasst.

10. Verfahren nach einem der Ansprüche 1 bis 7, bei dem das Verfahren einen Schritt (ii) des Gießens der Polymerlösung zu einem rohrförmigen Film über einem rohrförmigen Trägermaterial umfasst.

11. Verfahren nach einem der Ansprüche 1 bis 10, bei dem in Schritt (iii) das Nichtlösungsmittel des Nichtlösungsmittelbads aus der Gruppe bestehend aus:
- Wasser,
- aliphatischen Alkoholen, vorzugsweise aliphatischen Alkoholen mit kurzer Kette, beispielsweise 1 bis 6 Kohlenstoffatomen, weiter bevorzugt Methanol, Ethanol und Isopropanol, und
- Mischungen davon
ausgewählt wird.

12. Verfahren nach Anspruch 11, bei dem das Nichtlösungsmittelbad zusätzlich Mengen von bis zu 40 Gew.-%, bezogen auf das Gesamtgewicht des Nichtlösungsmittelbads, eines Lösungsmittels für das Polymer (P) umfasst.

## Revendications

1. Procédé de fabrication d'une membrane de polymère de sulfone comprenant les étapes de :
(i) préparation d'une solution de polymère de sulfone [solution (SP)] comprenant :
- au moins un polymère de sulfone [polymère (P)] ;
- un mélange de solvants [mélange (M)] comprenant : au moins un solvant choisi dans le groupe constitué de diesters de formule (I_{de}) et d'estéramide de formule (Iₑₐ), et comprenant facultativement au moins un diamide de formule (I_{da}) choisi dans le groupe constitué de :
(a) au moins l'un du diester (I'_{de}) et au moins un diester (I"_{de}), éventuellement en combinaison avec au moins un diester de formule (II_{de}) ; ou
(b) au moins l'un de l'estéramide (I'ₑₐ) et au moins un estéramide (I"ₑₐ), éventuellement en combinaison avec au moins un estéramide de formule (IIₑₐ) ; ou
(c) au moins l'un de l'estéramide (I'ₑₐ), au moins un diamide (I'_{da}), au moins un estéramide (I"ₑₐ) et au moins un diamide (I"_{da}), éventuellement en combinaison avec au moins un estéramide de formule (IIₑₐ) et/ou au moins un diamide de formule (II_{da}) ; ou
(iv) des combinaisons de (a) avec (b) et/ou (c), dans lesquelles :
- (I'_{de}) est R¹-OOC-A_{MG}-COO-R²
- (I'ₑₐ) est R¹-OOC-A_{MG}-CO-NR³R⁴
- (I'_{da}) est R⁵R⁶N-OC-A_{MG}-CO-NR⁵R⁶
- (I"_{de}) est R¹-OOC-A_{ES}-COO-R²
- (I"ₑₐ) est R⁵R⁶N-OC-A_{ES}-CO-NR⁵R⁶ ; et
- (II_{de}) est R¹-OOC-(CH₂)₄-COO-R²,
- (IIₑₐ) est R¹-OOC-(CH₂)₄-CO-NR³R⁴
- (II_{da}) est R⁵R⁶N-OC-(CH₂)₄-CO-NR⁵R⁶,
où :
- A_{MG} est de formule MGₐ-CH(CH₃)-CH₂-CH₂- ou MG_{b}-CH₂-CH₂-CH(CH₃)-,
- A_{ES} est de formule ESₐ-CH(C₂H₅)-CH₂- ou ES_{b}-CH₂-CH(C₂H₅)- ; et où R¹ et R², identiques ou différents l'un de l'autre, sont indépendamment choisis dans le groupe constitué de groupes alkyle en C₁-C₂₀, aryle en C₁-C₂₀, alkylaryle en C₁-C₂₀, arylalkyle en C₁-C₂₀ ;
- R³, R⁴, R⁵ et R⁶, identiques ou différents les uns des autres et à chaque occurrence, sont choisis dans le groupe constitué de groupes alkyle en C₁-C₂₀, aryle en C₁-C₂₀, alkyaryle en C₁-C₂₀, arylalkyle en C₁-C₂₀, tous lesdits groupes comprenant éventuellement un ou plusieurs substituants, comportant éventuellement un ou plusieurs hétéroatomes, et de fragments cycliques comprenant à la fois (1) R³ et R⁴ ou R⁵ et R⁶ et (2) l'atome d'azote auquel ils sont liés, lesdits fragments cycliques comprenant éventuellement un ou plusieurs hétéroatomes, par exemple un atome d'oxygène ou un atome d'azote additionnel,
et facultativement du diméthylsulfoxyde (DMSO) ;
(ii) la transformation de ladite solution (SP) en film ;
(iii) l'immersion dudit film dans un bain de non-solvant.

2. Procédé selon la revendication 1, dans lequel le mélange (M) est substantiellement exempt de tout solvant supplémentaire différent du DMSO et de solvants de formule (I_{de}), (Iₑₐ), (I_{da}), c'est-à-dire qu'il est essentiellement constitué de solvants de formule (I_{de}) et (Iₑₐ), et éventuellement de DMSO et/ou (I_{da}).

3. Procédé selon la revendication 1 ou 2, dans lequel au moins 50 % en moles des motifs récurrents dudit polymère (P) comprennent au moins un groupe de formule -Ar-SO₂-Ar'- [motifs récurrents (R_{SP})], avec Ar et Ar', identiques ou différents l'un de l'autre, étant des groupes aromatiques, de préférence dans lequel lesdits motifs récurrents (R_{SP}) sont des motifs récurrents (R_{SP-2}) selon la formule :
-Ar¹-(T'-Ar²)ₙ-O-Ar³-SO₂-[Ar⁴-(T-Ar²)ₙ-SO₂]ₘ-Ar⁵-O-(R_{SP-2})
dans lequel :
- Ar¹, Ar², Ar³, Ar⁴ et Ar⁵, identiques ou différents les uns des autres et à chaque occurrence, sont indépendamment un groupe mono- ou polynucléaire aromatique ;
- T et T', identiques ou différents l'un de l'autre et à chaque occurrence, sont indépendamment une liaison ou un groupe divalent comprenant facultativement un ou plusieurs hétéroatomes ; de préférence, T' est choisi dans le groupe constitué d'une liaison, -CH₂-, -C(O)-, -C(CH₃)₂-, -C(CF₃)₂-, -C(=CCl₂)-, -SO₂-, -C(CH₃)(CH₂CH₂COOH)-, et un groupe de formule : 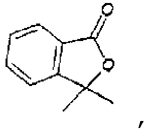 et
de préférence, T est choisi dans le groupe constitué d'une liaison, -CH₂-, -C(O)-, -C(CH₃)₂-, -C(CF₃)₂-, -C(=CCl₂)-, -C(CH₃) (CH₂CH₂COOH)-, et un groupe de formule : 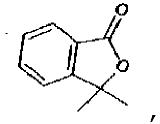 et
- n et m, identiques ou différents l'un de l'autre, sont indépendamment zéro ou un entier de 1 à 5.

4. Procédé selon la revendication 3, dans lequel les motifs récurrents (R_{SP-2}) du polymère (P) sont choisis dans le groupe constitué de ceux de formules (S-A) à (S-D) présentement décrites ci-dessous : 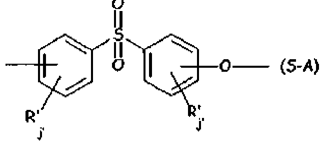 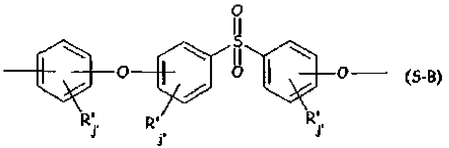 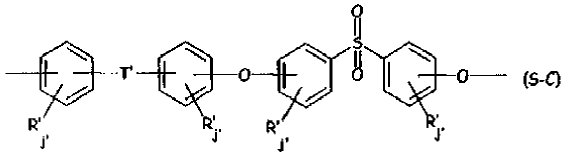 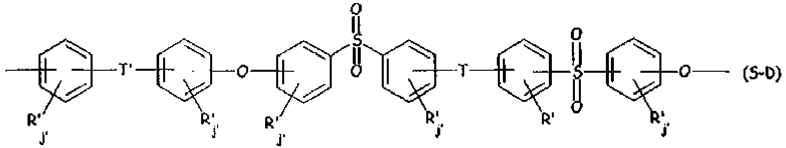 dans lesquelles :
- chacun des R', identiques ou différents les uns des autres, est choisi dans le groupe constitué d'halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
- T et T', identiques ou différents l'un de l'autre, sont une liaison ou un groupe divalent comprenant facultativement un ou plusieurs hétéroatomes ; de préférence, T' est choisi dans le groupe constitué d'une liaison, -CH₂-, -C(O)-, -C(CH₃)₂-, -C(CF₃)₂-, -C(=CCl₂)-, -C(CH₃)(CH₂CH₂COOH)-, -SO₂- et un groupe de formule : 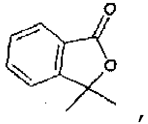 et
de préférence, T est choisi dans le groupe constitué d'une liaison, -CH₂-, -C(O)-, -C(CH₃)₂-, -C(CF₃)₂-, -C(=CCl₂)-, -C(CH₃)(CH₂CH₂COOH)-, et un groupe de formule : 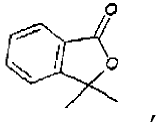 et
- j' est zéro ou est un entier de 0 à 4.

5. Procédé selon la revendication 4, dans lequel les motifs récurrents (R_{SP-2}) du polymère (P) sont des motifs récurrents de formule (S-C) choisis dans le groupe constitué des motifs suivants : 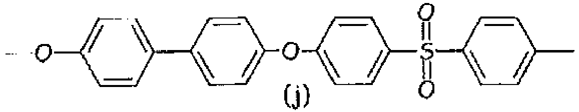 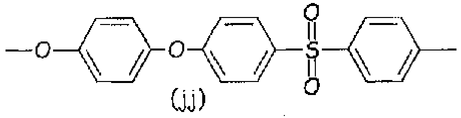 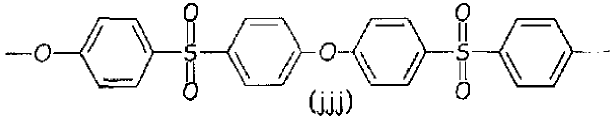 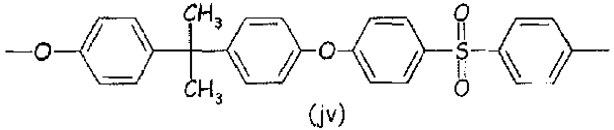 et des mélanges de ceux-ci.

6. Procédé selon l'une quelconque des revendications 1 à 5, dans lequel la concentration totale du polymère (P) dans la solution (SP) est au moins 10 % en poids, de préférence au moins 12 % en poids, sur la base du poids total de la solution (SP).

7. Procédé selon l'une quelconque des revendications 1 à 6, dans lequel la solution (SP) contient des agents porogènes choisis dans le groupe constitué de la polyvinylpyrrolidone (PVP) et du polyéthylèneglycol (PEG).

8. Procédé selon l'une quelconque des revendications 1 à 7, ledit procédé comprenant une étape (ii) de coulée de la solution (SP) sous la forme d'un film plat sur un support.

9. Procédé selon l'une quelconque des revendications 1 à 7, ledit procédé comprenant une étape (ii) de coulée de la solution de polymère sous la forme d'un film tubulaire autour d'un fluide de support.

10. Procédé selon l'une quelconque des revendications 1 à 7, ledit procédé comprenant une étape (ii) de coulée de la solution de polymère sous la forme d'un film tubulaire sur un matériau tubulaire de support.

11. Procédé selon l'une quelconque des revendications 1 à 10, dans lequel, dans l'étape (iii), le non-solvant du bain de non-solvant est choisi dans le groupe constitué de :
- l'eau,
- des alcools aliphatiques, de préférence, des alcools aliphatiques ayant une chaîne courte, par exemple 1 à 6 atomes de carbone, plus préférablement le méthanol, l'éthanol et l'isopropanol, et
- un mélange de ceux-ci.

12. Procédé selon la revendication 11, dans lequel le bain de non-solvant comprend en outre des quantités allant jusqu'à 40 % en poids, par rapport au poids total du bain de non-solvant, d'un solvant pour le polymère (P).
